# EUROPEAN PATENT APPLICATION

(11) **EP 3 831 208 A1**
(43) Date of publication of application: **09.06.2021**
(21) Application number: 20211909.5
(22) Date of filing: 04.12.2020
(51) Int. Cl.: A21D 6/00, A21D 8/02, A23L 5/30

(54) **METHOD AND ASSEMBLY FOR PROCESSING A PIECE OF DOUGH**

(30) Priority: 04.12.2019 NL 2024380
(71) Applicant: Kaak Groep B.V., 7061 GA Terborg (NL)
(72) Inventor: VEROUDEN, Franciscus Quirinus Fredrik, 7061 GA TERBORG (NL); KOKKOTI, Maria, 7061 GA TERBORG (NL)
(74) Representative: Peters, Sebastian Martinus

(57) **Abstract**

The invention relates to a method for processing a piece of dough, comprising the steps of: providing a piece of dough; and applying an electric field to the piece of dough in order to decrease the resistance of the piece of dough against deformation, wherein the method further comprises the step of allowing the piece of dough to rest during a predetermined preparation period before and/or after the step of applying the electric field to the piece of dough.

## Description

### BACKGROUND

The invention relates to a method for processing a piece of dough. Furthermore, the invention relates to an assembly for processing a piece of dough.

A method for processing a piece of dough, for example, is described in JP2013215216. The method of JP2013215216 involves bringing two metallic electrodes into contact with a yeast fermented dough, and allowing a high frequency current to flow between the two metallic electrodes. When the high frequency current flows through the yeast fermented dough, the dough acts as an electric resistor and heat is generated within the dough. As a result, the yeast fermented dough is uniformly heated in a short time, and the whole of the yeast fermented dough is baked while starch granules do not collapse or gelatinize into gel yet.

### SUMMARY OF THE INVENTION

It is well-known that during the known method of processing of dough the dough to be heated requires one or more conventional rest periods between processing steps in which mechanical force is exerted on the dough. During the conventional rest periods, the dough undergoes relaxation, causing the effects of the mechanical force exerted on the dough to be annulled at least partially. As a result, the resistance of the dough against deformation decreases. Each of the one or more conventional rest periods can be within the range of 20 - 50 minutes, or within the range of 5 - 10 minutes, depending on the operations performed on the dough. A disadvantage of the known method, therefore, is that when the one or more conventional rest periods are too short, the relaxation of the dough is insufficient resulting in poorly baked products. A further disadvantage is that the one or more rest periods cause a significant delay in the method for processing the dough.

It is an object of the present invention to ameliorate or to eliminate one or more disadvantages of the known method for processing a piece of dough, to provide an improved method for processing dough, or to provide an alternative method for processing a piece of dough.

According to a first aspect, the invention provides a method for processing a piece of dough, comprising the steps of:
- providing a piece of dough; and
- applying an electric field to the piece of dough in order to decrease the resistance of the piece of dough against deformation,
wherein the method further comprises the step of allowing the piece of dough to rest during a predetermined preparation period before and/or after the step of applying the electric field to the piece of dough.

The method according to the invention comprises the step of providing a piece of dough, which might involve mixing flour, water and other ingredients in order to form the dough. During providing the piece of dough, some mechanical forces are exerted to the piece of dough, resulting in an increased resistance of the piece of dough against deformation. By applying the electric field to the piece of dough, relaxation of the piece of dough is caused in a relatively short period of time. The inventors have surprisingly found that, contrary to expectations of the inventors, the step of allowing the piece of dough to rest during the predetermined preparation period before the step of applying the electric field to the piece of dough promotes relaxation of the piece of dough. During said predetermined preparation period the piece of dough is getting ready for a next step in the processing of the piece of dough. An advantage of the method according to the invention is that the relaxation of the dough is sufficient resulting in well-baked products.

A further advantage of the method according to the embodiment is that because of relaxation of the piece of dough by means of the electric field, the total time needed for performing the method is decreased.

In the context of the present application, the step of applying an electric field to the piece of dough has to be understood as comprising applying a voltage and/or current to the piece of dough.

In an embodiment, the method comprises the step of exerting a mechanical force on the piece, after the step of providing a piece of dough. In an embodiment thereof, the step of allowing the piece of dough to rest comprises the step of allowing the piece of dough to rest during the predetermined preparation period after the step of exerting the mechanical force on the piece of dough and before the step of applying the electric field to the piece of dough. After providing the piece of dough, the piece of dough has to be worked up before the dough can be baked. Working up involves, but is not limited to, kneading, shaping or dividing the piece of dough. During working up the piece of dough, mechanical force, including shear force, is exerted on the piece of dough. Because of the mechanical force exerted on the piece of dough, the resistance of the piece of dough against deformation increases. Since the piece of dough is allowed to rest during the predetermined preparation period after the mechanical force has been exerted thereon, the effects of the mechanical force are reduced or in the ideal case annulled by relaxation of the piece of dough.

In an embodiment, the method comprises the steps of exerting another mechanical force on the piece of dough, after the step of applying an electric field to the piece of dough, and of applying an electric field to the piece of dough again. In a further embodiment, the method comprises the step of allowing the piece of dough to rest during a further predetermined preparation period after the step of exerting another mechanical force on the piece of dough and before applying an electric field to the piece of dough again. An advantage of this embodiment is that the piece of dough is allowed to rest after each step of exerting a mechanical force thereon, before an electric field is applied to the piece of dough. Relaxation of the piece of dough after each step of exerting a mechanical force thereon, therefore, is optimized.

In an embodiment, the preparation period is within the range of 5 - 120 seconds, preferably 10 - 60 seconds, more preferably above 10 seconds. The inventors have surprisingly found that allowing the piece of dough to rest for 10 - 60 seconds, promotes relaxation of the piece of dough by applying the electric field to the respective piece of dough.

In an embodiment, the method comprises the step of determining a preparation period to be used during the step of allowing the piece of dough to rest during a predetermined preparation period, preferably in dependence of the mechanical force exerted on the piece of dough. In the embodiment, the preparation period to be used is advantageously adapted to the amount of mechanical force exerted on the piece of dough, therewith keeping the total time needed for performing the method as short as possible.

In an embodiment, the step of applying an electric field to the piece of dough comprises the step of applying the electric field to the piece of dough during a predetermined relaxation period, wherein the relaxation period is between 100 milliseconds - 5 seconds, preferably 500 milliseconds - 3 seconds, preferably less than 2 seconds, more preferably less than 1 second. The inventors have found that applying the electric field to the piece of dough, for example, for less than seconds, results in sufficient relaxation of the dough for further working up, such as baking.

In an embodiment, the step of exerting the mechanical force to the piece of dough comprises a step selected from the group comprising kneading, dividing and shaping the piece of dough.

In an embodiment, the step of applying an electric field to the piece of dough comprises the step of applying an alternating electric field and/or a pulsating electric field to the piece of dough.

In a further embodiment, when the electric field is an alternating electric field, the alternating electric field has a frequency of 50 Hz, preferably 100 Hz or higher, more preferably 1 KHz or higher. By changing the frequency of the alternating electric field, the relaxation time needed for relaxation of the piece of dough by applying the alternating electric field can be affected. For example, the higher the frequency of the alternating field, the shorter the relaxation time needed for sufficient relaxation of the piece of dough might be.

In an embodiment, the electric field applied to the piece of dough has an electric field strength in the range of 0.8 kV/m - 3 KV/m, or the step of applying an electric field comprises the step of applying a voltage between 50 - 250 V and/or a current between 0.18 - 2.7 A to the piece of dough. The inventors have surprisingly found that applying a voltage of 250 V and a current of 2.7 A, a voltage of 50 V and a current of 0.43 A, or a voltage of 50 V and a current of 0.18 A to a piece of dough of 890 grams for 2 seconds results in sufficient relaxation of the piece of dough. It is noted that the used voltage and/or or current may depend on the weight/volume of the piece of dough to which they are applied. An advantage of this embodiment is that the mentioned field strength, voltage and/or current result in sufficient relaxation of the piece of dough.

In an embodiment, the method comprises the step of baking the piece of dough after the step of applying the electric field to the piece of dough in order to accelerate dough relaxation.

According to a second aspect, the invention provides an assembly for processing a piece of dough, the assembly comprising:
- a dough processing device configured for exerting a mechanical force to the piece of dough;
- a pair of electrodes configured to be placed around the piece of dough;
- a power source operatively connected to the pair of electrodes for providing power to the pair of electrodes, wherein the pair of electrodes and the power source are configured for generating an electric field between the electrodes; and
- a controller operatively connected to the dough processing device, the pair of electrodes and/or the electrical source,
wherein the controller is configured for performing the steps of:
- applying an electric field to the piece of dough in order to accelerate dough relaxation; and
- allowing the piece of dough to rest during a predetermined preparation period before and/or after the step of applying the electric field to the piece of dough.

The assembly according to the invention has at least the same advantages as described in relation to the first aspect of the invention.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic block schedule of a method for processing a piece of dough according to an embodiment of the invention;
Figure 2 shows a schematic block schedule of a method for processing a piece of dough according to a further embodiment of the invention;
Figure 3 shows a schematic block schedule of a method for processing a piece of dough according to a further embodiment of the invention;
Figure 4 shows a schematic block schedule of a method for processing a piece of dough according to a further embodiment of the invention;
Figure 5 shows a schematic block schedule of a method for processing a piece of dough according to a further embodiment of the invention; and
Figure 6 shows a schematic overview of an assembly for processing a piece of dough according to an embodiment of the invention.

### DETAILED DESCRIPTION OF THE INVENTION

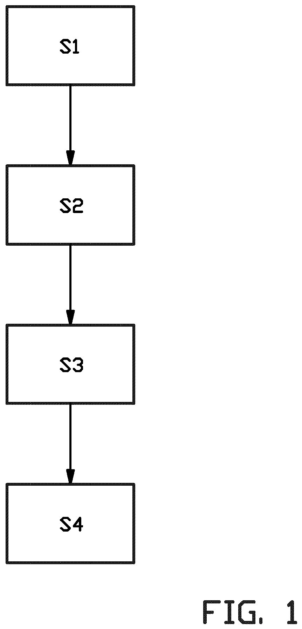

A schematic block schedule of a method for processing a piece of dough according to an embodiment of the invention is shown in figure 1. Figure 1 shows that the method comprises the step of providing S1 a piece of dough. The step of providing S1 a piece of dough may involve, but is not limited to, mixing flour, water and other ingredients in order to form the piece of dough. After providing S1 the piece of dough, a mechanical force, including shear force, is exerted S2 on the piece of dough during, for example, shaping or dividing the piece of dough. Following on the step of exerting mechanical force to the piece of dough, the piece of dough is allowed S3 to rest during a predetermined preparation period, for example, of 10 - 60 seconds. The predetermined preparation period thus leads up to the next step S4 in the processing of the piece of dough. After allowing the piece of dough to rest for the predetermined period, the step of applying S4 an electrical field to the piece of dough is performed in order to accelerate dough relaxation. When relaxation of the piece of dough is sufficient, the piece of dough can be processed further, such as dividing, shaping or baking the piece of dough.

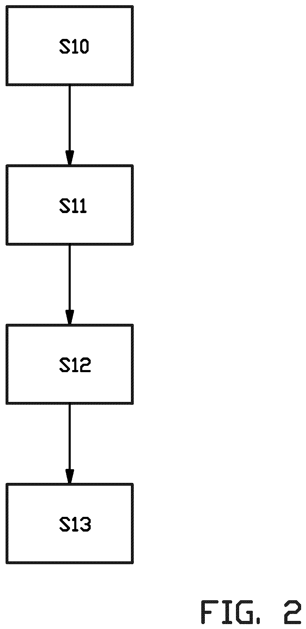

Figure 2 shows a schematic block schedule of a method for processing a piece of dough according to a further embodiment of the invention. It is shown that the method comprises the step of providing S10 a piece of dough. The step of providing S10 may correspond to step S1 of figure 1. After providing S10 the piece of dough, a mechanical force, including shear force, is exerted S11 on the piece of dough. The step of exerting S11 the mechanical force may correspond to step S2 of figure 1. Following on the step of exerting S11 mechanical force, an electrical field is applied S12 to the piece of dough in order to accelerate relaxation of the piece of dough. When relaxation of the piece of dough is considered to be sufficient, the piece of dough is allowed S13 to rest during a predetermined preparation period, for example, in order to cause further relaxation of the piece of dough which, for example, might be related to processes insensitive for the electric field applied to the piece of dough. The predetermined preparation period thus leads up to the next step in the processing of the piece of dough. When the piece of dough has rest for the predetermined preparation period, the piece of dough can be processed further, such as dividing, shaping or baking the piece of dough.

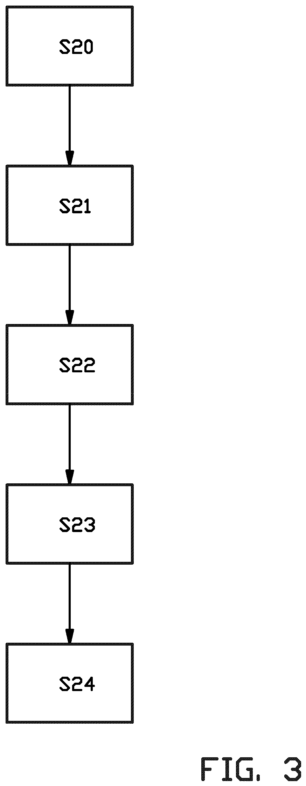

A schematic block schedule of a method for processing a piece of dough according to a further embodiment of the invention is shown in figure 3. Figure 3 shows that the method comprises the step of providing S20 a piece of dough, which step might correspond to step S1 of figure 1. When the piece of dough is provided, a mechanical force is exerted S21 on the piece of dough during, for example, shaping or dividing the piece of dough. After shaping or dividing the piece of dough, the piece of dough is allowed S22 to rest during a predetermined preparation period, for example, of 5 - 120 seconds, preferably 10 - 60 seconds. The predetermined preparation period thus leads up to the next step S23 in the processing of the piece of dough. After allowing the piece of dough to rest for the predetermined period, an electrical field is applied S23 to the piece of dough in order to accelerate dough relaxation. After relaxation of the piece of dough, the piece of dough is again allowed S24 to rest for a further predetermined preparation period, which might differ from the predetermined preparation period, in order to cause, for example, further relaxation of the piece of dough which, for example, might be related to processes insensitive for the electric field applied to the piece of dough. The predetermined preparation period thus leads up to the next step in the processing of the piece of dough. Subsequently, the piece of dough can be processed further, such as dividing, shaping or baking the piece of dough.

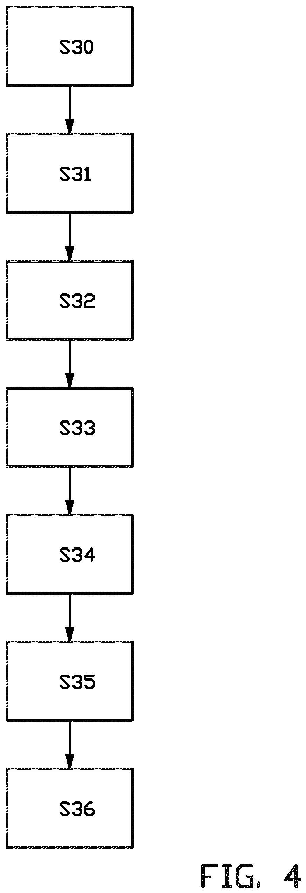

Figure 4 shows a schematic block schedule of a method for processing a piece of dough according to a further embodiment of the invention. Figure 4 shows that the method comprises the step of providing S30 a piece of dough, which step might correspond to step S1 of figure 1. When the piece of dough is provided, a mechanical force is exerted S31 on the piece of dough during, for example, dividing the piece of dough into multiple dough portions. After providing the multiple dough portions, the multiple dough portions are allowed S32 to rest during a predetermined preparation period, for example, of 5 - 120 seconds, preferably 10 - 60 seconds. After allowing the multiple dough portions to rest, an electrical field is applied S33 to each of the multiple dough portions in order to accelerate dough relaxation. After relaxation of the piece of dough, another mechanical force is exerted S34 on each of the multiple dough portions during, for example, shaping of the multiple dough portions. During shaping of each of the multiple dough portions, the resistance of each of the dough portions to deformation increases. Subsequently, each of the multiple dough portions is allowed S35 to rest again during a further predetermined preparation period. The further predetermined preparation period might correspond to the predetermined preparation period of step S32. Following on step S35, an electric field is applied S36 to each of the multiple dough portions again in order to cause relaxation of each of the multiple dough portions. Then, each of the multiple dough portions can be processed further, such as baking the multiple dough portions.

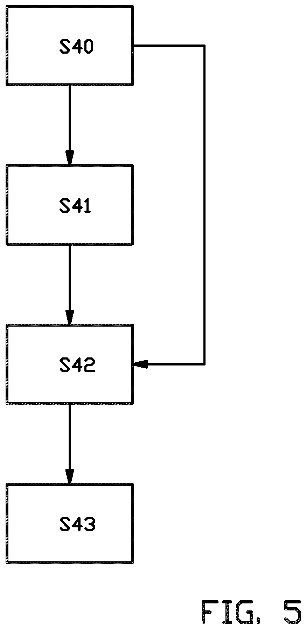

A schematic block schedule of a method for processing a piece of dough according to a further embodiment of the invention is shown in figure 5. Figure 5 shows that the method comprises the step of providing S40 a piece of dough. The step of providing S40 may correspond to step S1 of figure 1. During providing S40 the piece of dough, usually some mechanical forces are exerted on the piece of dough, resulting in an increased resistance of the piece of dough against deformation. The method further comprises the step of applying S42 an electric field to the piece of dough in order to cause relaxation of the piece of dough. Relaxation of dough results in a decreased resistance of the piece of dough against deformation. Before the step of applying S42 the electric field, the method optionally, as schematically indicated in figure 5, comprises the step of allowing S41 the piece of dough to rest during a predetermined preparation period, in order to prepare the piece of dough for the step of applying S42 the electric field. After the step of applying S42 the electric field to the piece of dough, the method comprises optionally the step of allowing S43 the piece of dough to rest during a further predetermined preparation period.

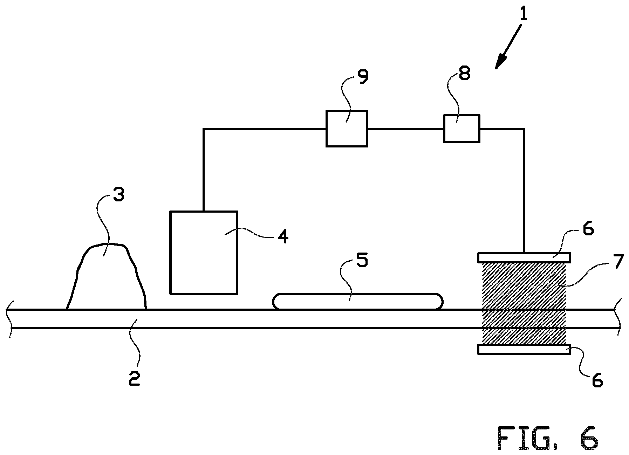

Figure 6 shows a schematic overview of an assembly 1 for processing a piece of dough 3. The assembly 1 comprises a conveyor 2 and a shaping device 4, wherein the conveyor 2 is arranged for transporting a piece of dough from a non-shown kneader, in which the piece of dough is mixed, to the shaping device. The shaping device 4 is arranged for shaping the piece of dough 3, for example, into a strand of dough 5. Downstream of the shaping device 4, a pair 6 of electrodes is arranged around the conveyor 2 in order to generate an electric field 7 to be passed by the strand of dough. The pair 6 of electrodes is operatively connected to a power source 8 configured for providing power to the pair 6 of electrodes. The assembly 1 further comprises a controller 9 which is operatively connected to the shaping device 4 and the power source 8. The controller 9 is configured for instructing the shaping device 4 and the power source 8, in combination with the pair 6 of electrodes, to perform the steps according to any one of the methods described in figures 1 - 5.

In another embodiment, the shaping device 4 may be a non-shown dividing device, or the assembly 1 may comprise the shaping device 4 and the non-shown dividing device.

Optionally, the controller 9 is operatively connected to the conveyor 2, for example, in order to adjust the conveying speed of the conveyor 2. For example, when lowering the conveying speed of the conveyor 2, more conveying time is needed for the strand of dough 5 to move from the shaping device 4 to the pair 6 of electrodes. The needed conveying time may correspond to the predetermined preparation period during which the piece of dough, in this case the strand of dough 5, is allowed to rest.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Method for processing a piece of dough, comprising the steps of:
- providing a piece of dough; and
- applying an electric field to the piece of dough in order to decrease the resistance of the piece of dough against deformation,
wherein the method further comprises the step of allowing the piece of dough to rest during a predetermined preparation period before and/or after the step of applying the electric field to the piece of dough.

2. Method for processing a piece of dough according to claim 1, further comprising the step of exerting a mechanical force on the piece, after the step of providing a piece of dough.

3. Method for processing a piece of dough according to claim 2, wherein the step of allowing the piece of dough to rest comprises the step of allowing the piece of dough to rest during the predetermined preparation period after the step of exerting the mechanical force on the piece of dough and before the step of applying the electric field to the piece of dough.

4. Method for processing a piece of dough according to any one of claims 2 - 3, comprising the steps of exerting another mechanical force on the piece of dough, after the step of applying an electric field to the piece of dough, and of applying an electric field to the piece of dough again.

5. Method for processing a piece of dough according to claim 4, comprising the step of allowing the piece of dough to rest during a further predetermined preparation period after the step of exerting another mechanical force on the piece of dough and before applying an electric field to the piece of dough again.

6. Method for processing a piece of dough according to any one of the preceding claims, wherein the preparation period is within the range of 5 - 120 seconds, preferably 10 - 60 seconds, more preferably above 10 seconds.

7. Method for processing a piece of dough according to any one of the preceding claims, comprising the step of determining a preparation period to be used during the step of allowing the piece of dough to rest during a predetermined preparation period, preferably in dependence of the mechanical force exerted on the piece of dough.

8. Method according to any one of the preceding claims, wherein the step of applying an electric field to the piece of dough comprises the step of applying the electric field to the piece of dough during a predetermined relaxation period, wherein the relaxation period is between 100 milliseconds - 5 seconds, preferably 500 milliseconds - 3 seconds, preferably less than 2 seconds, more preferably less than 1 second.

9. Method for processing a piece of dough according to any one of the preceding claims, wherein the step of exerting the mechanical force to the piece of dough comprises a step selected from the group comprising kneading, dividing and shaping the piece of dough.

10. Method for processing a piece of dough according to any one of the preceding claims, wherein the step of applying an electric field to the piece of dough comprises the step of applying an alternating electric field and/or a pulsating electric field to the piece of dough.

11. Method for processing a piece of dough according to claim 10, wherein when the electric field is an alternating electric field, the alternating electric field has a frequency of 50 Hz, preferably 100 Hz or higher, more preferably 1 KHz or higher.

12. Method for processing a piece of dough according to any one of the preceding claims, wherein the electric field applied to the piece of dough has an electric field strength in the range of 0.8 kV/m - 3 KV/m, or wherein the step of applying an electric field comprises the step of applying a voltage between 50 - 250 V and/or a current between 0.18 - 2.7 A to the piece of dough.

13. Method for processing a piece of dough according to any one of the preceding claims, comprising the step of baking the piece of dough after the step of applying the electric field to the piece of dough in order to accelerate dough relaxation.

14. Assembly for processing a piece of dough, the assembly comprising:
- a dough processing device configured for exerting a mechanical force to the piece of dough;
- a pair of electrodes configured to be placed around the piece of dough;
- a power source operatively connected to the pair of electrodes for providing power to the pair of electrodes, wherein the pair of electrodes and the power source are configured for generating an electric field between the electrodes; and
- a controller operatively connected to the dough processing device, the pair of electrodes and/or the electrical source,
wherein the controller is configured for performing the steps of:
- applying an electric field to the piece of dough in order to decrease the resistance of the piece of dough against deformation; and
- allowing the piece of dough to rest during a predetermined preparation period before and/or after the step of applying the electric field to the piece of dough.
